# EUROPEAN PATENT SPECIFICATION

(11) **EP 3 450 266 B1**
(45) Date of publication and mention of the grant of the patent: **16.06.2021**
(21) Application number: 18187688.9
(22) Date of filing: 07.08.2018
(51) Int. Cl.: B60S 1/08

(54) **WIPER DEVICE**
WISCHERVORRICHTUNG
DISPOSITIF D'ESSUIE-GLACE

(30) Priority: 30.08.2017 JP 2017165519
(43) Date of publication of application: 06.03.2019
(73) Proprietor: Mitsuba Corporation, Kiryu-shi Gunma 376-8555 (JP)
(72) Inventor: Tai, Takashi, Gunma, 376-8555 (JP); Kobayashi, Tomofumi, Gunma, 376-8555 (JP)
(74) Representative: Patentanwälte Bals & Vogel

(56) References cited:
- EP-A1- 1 944 209
- JP-A- 2014 195 389
- US-A1- 2010 139 025

## Description

### CROSS-REFERENCE TO RELATED APPLICATION

The present application claims priority from Japanese Patent Application No. 2017-165519 filed on August 30, 2017.

### TECHNICAL FIELD OF THE INVENTION

The present invention relates to a wiper device that swingably or pivotably drives a wiper member to wipe an adhesive substance attached onto a windshield.

### BACKGROUND ART

Heretofore, a wiper device configured to wipe rainwater, dust, and the like that are attached onto a windshield, and a washer fluid injection apparatus configured to inject washer fluid onto the windshield and to wipe the injected washer fluid while working together the wiper device are mounted on a vehicle such as an automobile. The wiper device includes a wiper member that carries out a swinging motion on the windshield, and a motor configured to cause the wiper member to carry out the swinging motion. When an operator operates a wiper switch (or a washer switch that works closely together with the wiper switch) provided in a vehicle interior to be turned on, the motor is driven to rotate. In response to rotation of the motor, the wiper member carries out a reciprocating wiping-out operation on the windshield to wipe an adhesive substance.

As a technique of such a wiper device, for example, a wiper device linked to a washer, which is described in Patent Document 1, is known. The wiper device drives a wiper by interlocking an on-operation state of a washer switch, and continues to drive the wiper for a predetermined time after driving of the washer fluid injection apparatus is stopped. Moreover, after driving of the wiper is stopped, the wiper device drives the wiper again after a certain period of time elapses. This is because washer fluid that falls down from an upper portion of a window surface is to be wiped. Furthermore, wiper devices that swingably or pivotably drive a wiper member to wipe an adhesive substance attached onto a windshield are known from Patent Documents 2 to 4.

### RELATED ART DOCUMENTS

### PATENT DOCUMENTS

Patent Document 1: Japanese Patent Application Publication No. H07-41645,
Patent Document 2: US 2010/139025 A1,
Patent Document 3: JP 2014 195389 A,
Patent Document 4: EP 1 944 209 A1.

### SUMMARY OF THE INVENTION

### PROBLEMS TO BE SOLVED BY THE INVENTION

A vehicle such as an automobile generally receives a larger influence of wind pressure as vehicle speed thereof becomes higher. For this reason, in the wiper device, a load state on the motor becomes higher with an increase in the vehicle speed. When the vehicle speed reaches a certain level of vehicle speed, it becomes difficult to maintain rotary drive of the motor. This may cause a situation that a wiping-out operation cannot be carried out normally. In order to prevent such a situation, a method of using a motor with a high output (represented by multiplying "speed of rotation" by "torque") is considered. However, in this case, there is a possibility that the wiper device increases in size and/or a cost of the wiper device is increased.

It is an object of the present invention to provide a small wiper device capable of addressing vehicle speed in a wide range.

### MEANS FOR SOLVING THE PROBLEM

According to the present invention, there is provided a wiper device mounted on a vehicle, the wiper device configured to control a duty ratio in accordance with target speed of rotation to cause a wiper member to carry out a wiping-out operation on a window surface by using a motor, the target speed of rotation being instructed by an operation for a wiper switch. The wiper device includes: a rotation speed detecting unit configured to detect speed of rotation of the motor; a PWM signal generating unit configured to control the duty ratio in a range lower than a duty ratio upper limit, and to generate a PWM signal to which the duty ratio is reflected; a lock detecting unit configured to carry out a predetermined protecting operation in a case where the speed of rotation detected by the rotation speed detecting unit is lower than a lock determination threshold value; and a condition setting unit configured to respectively set the duty ratio upper limit and the lock determination threshold value to a first upper limit and a first determination threshold value in a first case in which vehicle speed of the vehicle is lower than a vehicle speed determination threshold value defined in advance, the condition setting unit being configured to respectively set the duty ratio upper limit and the lock determination threshold value to a second upper limit higher than the first upper limit and a second determination threshold value lower than the first determination threshold value in a second case in which the vehicle speed is higher than the vehicle speed determination threshold value, wherein the predetermined protecting operation carried out by the lock detecting unit is an operation in which working of the motor is stopped, and wherein the condition setting unit is configured to set a number of times of an after-wiping-out operation to a first number of times in the first case, the after-wiping-out operation being a wiping-out operation for window washer fluid on the window surface after the window washer fluid is injected onto the window surface. Further, the condition setting unit is configured to set the number of times of the after-wiping-out operation to a second number of times in the second case, the second number of times being smaller than the first number of times.

In still another aspect of the present invention, the condition setting unit may be configured to set a number of times of an adaptive after-wiping-out operation to a predetermined number of times in the first case, the adaptive after-wiping-out operation being a wiping-out operation for headlight washer fluid on the window surface after the headlight washer fluid is injected onto a headlight. Further, the condition setting unit may be configured to set the number of times of the adaptive after-wiping-out operation to zero in the second case.

In still another aspect of the present invention, the condition setting unit may be configured to set a number of times of a drop wiping-out operation to a predetermined number of times in the first case, the drop wiping-out operation being a wiping-out operation for the window washer fluid that remains on the window surface after a predetermined period of time elapses since the after-wiping-out operation is terminated. Further, the condition setting unit may be configured to set the number of times of the drop wiping-out operation to zero in the second case.

In still another aspect of the present invention, the condition setting unit may be configured to determine whether the vehicle is in the first case or the second case after an off-operation signal for the wiper switch is received, and to set the number of times of the after-wiping-out operation in accordance with a determination result.

### EFFECTS OF THE INVENTION

According to the present invention, a duty ratio upper limit of a PWM signal for a motor of a wiper device is set to higher at the time of high-speed traveling of a vehicle compared with that at the time of low-speed traveling, and a lock determination threshold value is set to lower.

This makes it possible to address vehicle speed in a wide range by using a small wiper device that does not require a motor with a high output.

### BRIEF DESCRIPTIONS OF THE DRAWINGS

FIG. 1 is a schematic diagram showing a configuration example of a part of a vehicle on which a wiper device is mounted.
FIG. 2 is an appearance diagram showing a configuration example of a motor included in the wiper device shown in FIG. 1.
FIG. 3 is a bottom view showing an example of an internal structure of the motor shown in FIG. 2.
FIG. 4 is a block diagram showing a configuration example of a control board shown in FIG. 2 and FIG. 3.
FIG. 5 is a timing chart showing one example of Hall signals from rotating shaft sensors and a sensor signal from an output shaft sensor in FIG. 3.
FIG. 6 is a flowchart showing an example of an operation of a lock detecting unit shown in FIG. 4.
FIG. 7 is a flowchart showing an example of a schematic operation of a wiping sequence control unit shown in FIG. 4.
FIG. 8 is a flowchart showing an example of an operation of a vehicle speed determining unit shown in FIG. 4.
FIG. 9 is a flowchart showing an example of an operation of the wiping sequence control unit shown in FIG. 4.
FIG. 10 is a flowchart showing one example of processing content of a normal wiping-out operation in FIG. 9.
FIG. 11 is a flowchart showing one example of processing content of an after-wiping-out operation in FIG. 9.
FIG. 12 is a flowchart showing one example of processing content of an adaptive after-wiping-out operation in FIG. 9.
FIG. 13 is a flowchart showing one example of processing content of a drop wiping-out operation in FIG. 9.

### DESCRIPTIONS OF THE PREFERRED EMBODIMENTS

Hereinafter, an embodiment according to the present invention will be described in detail with reference to the accompanying drawings.

### «Schematic Configuration of Wiper Device»

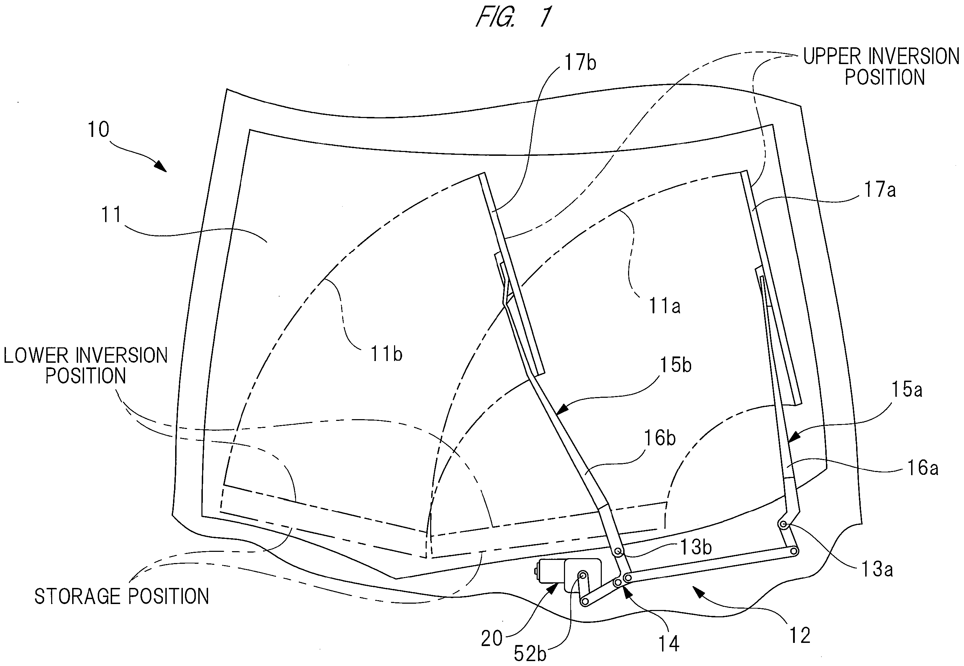

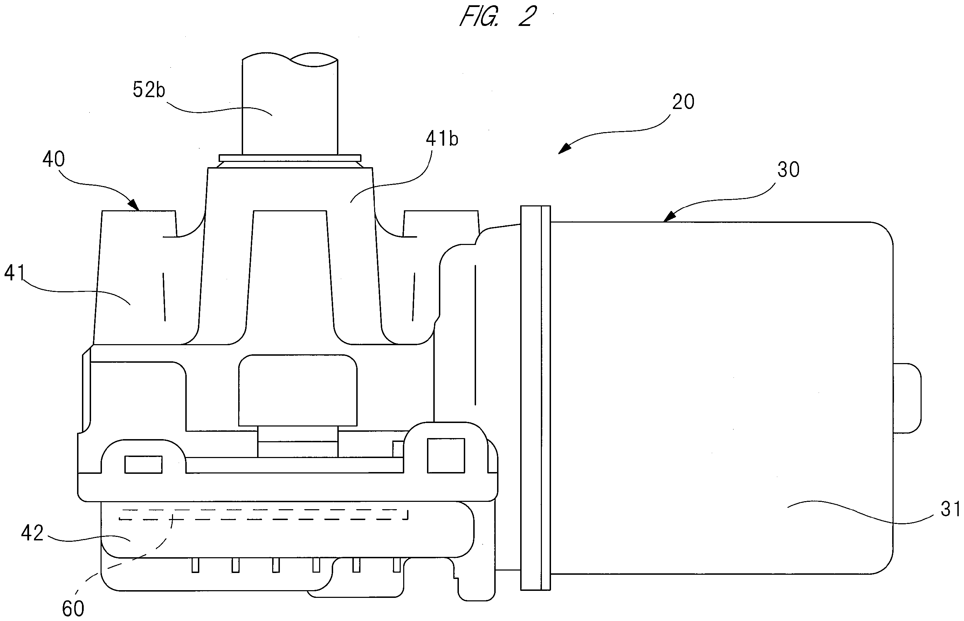

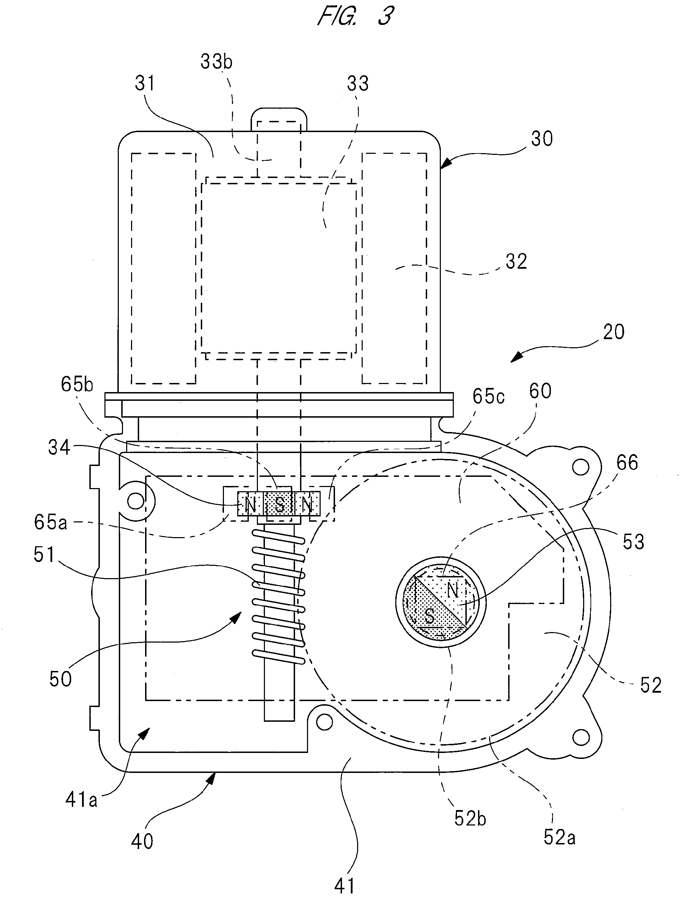

FIG. 1 is a schematic diagram showing a configuration example of a part of a vehicle on which a wiper device is mounted. FIG. 2 is an appearance diagram showing a configuration example of a motor included in the wiper device shown in FIG. 1. FIG. 3 is a bottom view showing an example of an internal structure of the motor shown in FIG. 2, and shows a state that a gear cover is removed from a gear housing included in the motor shown in FIG. 2. As shown in FIG. 1, a windshield (front window) 11 is provided in a vehicle 10 such as an automobile as a windshield (window surface). A wiper device 12 is mounted so as to come close to the windshield 11. An operator operates a wiper switch (not shown in the drawings) in a vehicle interior to be turned on, whereby the wiper device 12 operates to wipe an adhesive substance attached onto the windshield 11.

The wiper device 12 includes a motor 20, a power transmission mechanism 14, and a pair of wiper members 15a, 15b. The power transmission mechanism 14 transmits a swinging motion of the motor 20 to each of pivots 13a, 13b. Base ends of the pair of wiper members 15a, 15b are respectively fixed to the pivots 13a, 13b. Tip portions of the pair of wiper members 15a, 15b carry out a reciprocating wiping-out operation on the windshield 11 by means of swinging motions of the respective pivots 13a, 13b. The motor 20 is a brushless motor in the present embodiment. The wiper members 15a, 15b are respectively provided so as to correspond to a driver's seat side and a passenger seat side. The wiper members 15a, 15b respectively include wiper arms 16a, 16b, and wiper blades 17a, 17b respectively fitted to the wiper arms 16a, 16b.

The motor 20 causes the wiper members 15a, 15b to carry out the reciprocating wiping-out operation. Namely, when the motor 20 rotates, the swinging motion of the motor 20 is transmitted to each of the pivots 13a, 13b via the power transmission mechanism 14, whereby each of the pivots 13a, 13b carries out the swinging motion. In this manner, driving force of the motor 20 is transmitted to each of the wiper members 15a, 15b, and the wiper blades 17a, 17b wipes an adhesive substance attached in wiping-out ranges 11a, 11b on the windshield 11. Each of the wiping-out ranges 11a, 11b is formed by a range between a corresponding lower inversion position and a corresponding upper inversion position. Further, the motor 20 respectively pulls the wiper blades 17a, 17b out from storage positions to the wiping-out ranges 11a, 11b via the lower inversion positions at the time of start of the wiping-out operation. The motor 20 respectively returns the wiper blades 17a, 17b from the wiping-out ranges 11a, 11b to the storage positions via the lower inversion positions at the time of end of the wiping-out operation.

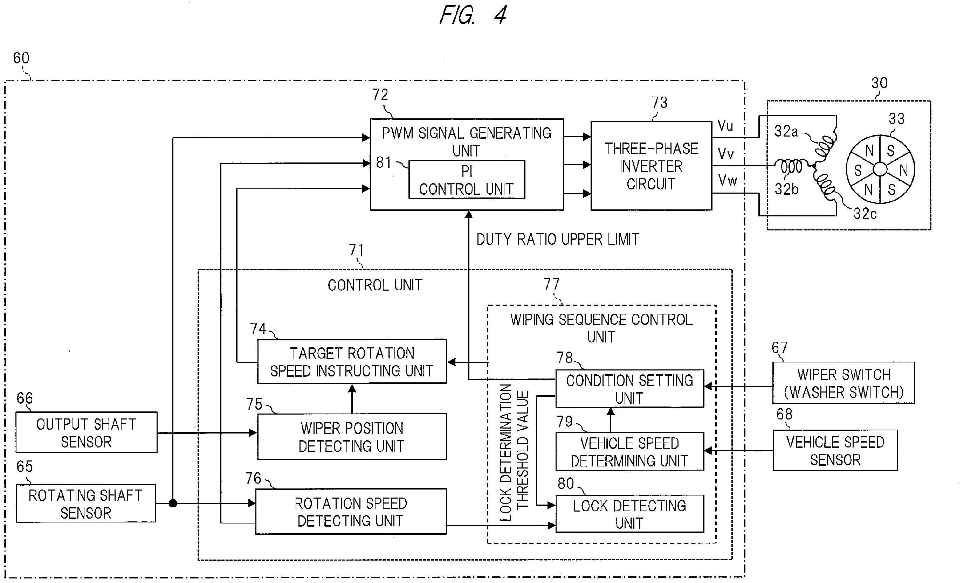

In FIG. 2 and FIG. 3, the motor 20 includes a motor body portion 30 and a decelerating mechanism unit 40. The motor body portion 30 includes a yoke 31 that is formed in a bottomed cylindrical manner by press working or the like of a steel plate. A stator 32 that is annularly formed is fixed inside the yoke 31. U phase, V phase, and W phase (three phases) of coils (32a, 32b, 32c in FIG. 4, which will be described later) are wound on the stator 32 in a star connection manner.

As shown in FIG. 3, a rotor 33 is rotatably provided inside the stator 32 via a predetermined gap (an air gap). The rotor 33 has an IPM (Interior Permanent Magnet) structure in which permanent magnets with plural poles are embedded, for example. In the present embodiment, a six-pole structure (see FIG. 4) in which permanent magnets with alternately different polarity are arranged along a circumferential direction of the rotor 33 at 60° intervals is illustrated as an example. However, the rotor 33 may have a four-pole structure, an eight-pole structure, or the like. Further, the structure of the rotor 33 is not limited to the IPM structure. For example, the rotor 33 may have an SPM (Surface Permanent Magnet) structure in which a plurality of permanent magnets is attached onto an outer periphery of a rotor.

A rotating shaft 33b is fixed so as to penetrate the center of rotation of the rotor 33. A base end portion of the rotating shaft 33b (that is, an upper side in FIG. 3) is rotatably supported by a bearing (not shown in the drawings), which is provided on a bottom of the yoke 31. A tip portion of the rotating shaft 33b (that is, a lower side in FIG. 3) extends to the inside of a gear housing 41, which forms the decelerating mechanism unit 40. An extending portion of the rotating shaft 33b into the gear housing 41, that is, the tip portion and a substantially center portion of the rotating shaft 33b, which are positioned in the gear housing 41, are rotatably supported by a pair of bearings (not shown in the drawings) provided in the gear housing 41, respectively.

A worm 51 is provided integrally with the rotating shaft 33b at the tip portion of the rotating shaft 33b. The worm 51 forms a decelerating mechanism 50. Further, a magnet for the rotating shaft (hereinafter, referred to as a "rotating shaft magnet") 34 formed in a circular manner is provided integrally with the rotating shaft 33b at a portion of the rotating shaft 33b between the worm 51 and the rotor 33 and near the worm 51. The rotating shaft magnet 34 is provided on the extending portion of the rotating shaft 33b into the gear housing 41. The rotating shaft magnet 34 includes permanent magnets with plural poles, which are arranged along a circumferential direction of the rotating shaft 33b. The permanent magnets of the rotating shaft magnet 34 are constituted by the same number of poles as those of the permanent magnets of the rotor 33 described above, for example. In the present embodiment, the permanent magnets of the rotating shaft magnet 34 have a six-pole structure in which the permanent magnets are arranged along a circumferential direction of the rotating shaft magnet 34 at 60° intervals.

The rotating shaft magnet 34 is used to detect speed of rotation of the rotating shaft 33b. In addition, the rotating shaft magnet 34 is used to detect a rotational position of the rotor 33 with respect to the stator 32 via the rotating shaft 33b. Therefore, the permanent magnets of the rotating shaft magnet 34 are installed so that polarity of the permanent magnets of the rotor 33 sequentially corresponds with polarity of the permanent magnets of the rotating shaft magnet 34 with respect to a rotational position of the rotating shaft 33b. By correspondence of the polarities each other in this manner, correction control to correct phase shifting of the polarity and the like is not required when the rotational position of the rotor 33 is detected. Therefore, it becomes possible to avoid complication of control for the motor 20.

In this regard, the number of poles of the permanent magnets of the rotating shaft magnet 34 is not necessarily the same as the number of poles of the permanent magnets of the rotor 33. For example, the number of poles of the permanent magnets of the rotating shaft magnet 34 may be integral multiple of the number of poles of the permanent magnets of the rotor 33. Namely, the rotating shaft magnet 34 may be configured so that the polarity of the permanent magnets of the rotating shaft magnet 34 changes at each of the rotational positions of the rotating shaft 33b at which the polarity of the permanent magnets of the rotor 33 changes. When the number of poles of the permanent magnets of the rotating shaft magnet 34 is set to twice or more of the number of poles of the permanent magnets of the rotor 33, the rotational position of the rotor 33 with respect to the stator 32 can be obtained so as to be further segmentalized. For this reason, it may be possible to control the rotor 33 in minute detail.

As shown in FIG. 2 and FIG. 3, the decelerating mechanism unit 40 includes a gear cover 42 made of plastic in addition to the gear housing 41 made of aluminum. The gear cover 42 blocks or closes an opening 41a (on the near side in FIG. 3) of the gear housing 41. The yoke 31 is fixed to the gear housing 41 via a fastening member (a fixing screw or the like, not shown in the drawings) . This causes the motor body portion 30 and the decelerating mechanism unit 40 to be provided integrally. The worm 51 and the rotating shaft magnet 34 that are provided on the rotating shaft 33b are arranged in the gear housing 41.

A worm wheel 52 (whose details are not shown in the drawings) is rotatably provided inside the gear housing 41. The worm wheel 52 is formed of resin material such as POM (polyacetal) plastic in a disc-like shape, for example. Gear teeth 52a (whose details are not shown in the drawings) are formed on an outer peripheral portion of the worm wheel 52. The gear teeth 52a of the worm wheel 52 engage with the worm 51, whereby the worm wheel 52 constitutes the decelerating mechanism 50 together with the worm 51.

A base end side of an output shaft 52b is fixed to the center of rotation of the worm wheel 52. The output shaft 52b is rotatably supported by a boss 41b of the gear housing 41 via a bearing (not shown in the drawings) . A tip side of the output shaft 52b extends toward the outside of the gear housing 41. As shown in FIG. 1, the power transmission mechanism 14 is fixed to a tip portion of the output shaft 52b. This causes the speed of rotation of the rotating shaft 33b to be reduced via the worm 51 and the worm wheel 52 (that is, the decelerating mechanism 50). Torque increased by this reduction of the rotation speed is outputted to the power transmission mechanism 14 via the output shaft 52b.

As shown in FIG. 3, a tablet-like magnet for the output shaft (hereinafter, referred to as an "output shaft magnet") 53 is provided at an extending portion of the output shaft 52b into the gear housing 41 via the worm wheel 52. The output shaft magnet 53 is attached so as to be rotated together with the output shaft 52b. In the output shaft magnet 53, a range of about 180° along a circumferential direction thereof is magnetized to a south pole, and a remaining range of about 180° thereof is magnetized to a north pole. The output shaft magnet 53 is used to detect a rotational position of the output shaft 52b with respect to the gear housing 41.

The opening 41a of the gear housing 41 is formed for accommodating component parts such as the worm wheel 52 inside the gear housing 41. As shown in FIG. 2, the opening 41a is blocked or closed (or covered) by the gear cover 42. A seal member (not shown in the drawings) is provided between the gear housing 41 and the gear cover 42. This makes it possible to prevent rainwater or the like from entering the inside of the decelerating mechanism unit 40 from a gap between the gear housing 41 and the gear cover 42. As shown in FIG. 2 and FIG. 3, a control board 60 is mounted in the gear cover 42. The control board 60 is electrically connected to an external power source and a wiper switch via an external connector (not shown in the drawings) provided in the vehicle 10 side. The external connector is connected to a connector connecting unit (not shown in the drawings) provided in the gear cover 42.

As shown in FIG. 3, three rotating shaft sensors 65a, 65b, 65c and an output shaft sensor 66 are mounted on the control board 60. The three rotating shaft sensors 65a, 65b, 65c are provided so as to respectively correspond to three phases (including a U phase, a V phase, and a W phase) . Each of the three rotating shaft sensors 65a, 65b, 65c is constituted by a Hall IC. The Hall IC generates a Hall signal (that is, a pulse signal) whose logical level changes in accordance with a change in polarity (including a change from the north pole to the south pole and a change from the south pole to the north pole). The output shaft sensor 66 is constituted by an MR sensor that is composed of a magnetoresistive element, for example. The MR sensor generates output voltage depending upon the magnitude of a magnetic field.

Each of the rotating shaft sensors 65a to 65c is mounted at a position that faces the rotating shaft magnet 34. More specifically, the rotating shaft sensors 65a to 65c are arranged at even intervals and mounted on the control board 60 so as to face an outer periphery (that is, a side surface) of the rotating shaft magnet 34. Herewith, the respective rotating shaft sensors 65a to 65c in turn generate Hall signals with a predetermined phase difference with rotation of the rotating shaft magnet 34. In this regard, in the present specification, the rotating shaft sensors 65a to 65c are collectively called as a "rotating shaft sensor 65". The output shaft sensor 66 is mounted on the control board 60 at a position that faces the output shaft magnet 53. Herewith, the output shaft sensor 66 generates a sensor signal in which a voltage value continuously changes in accordance with rotation of the output shaft magnet 53.

### «Details of Control Board»

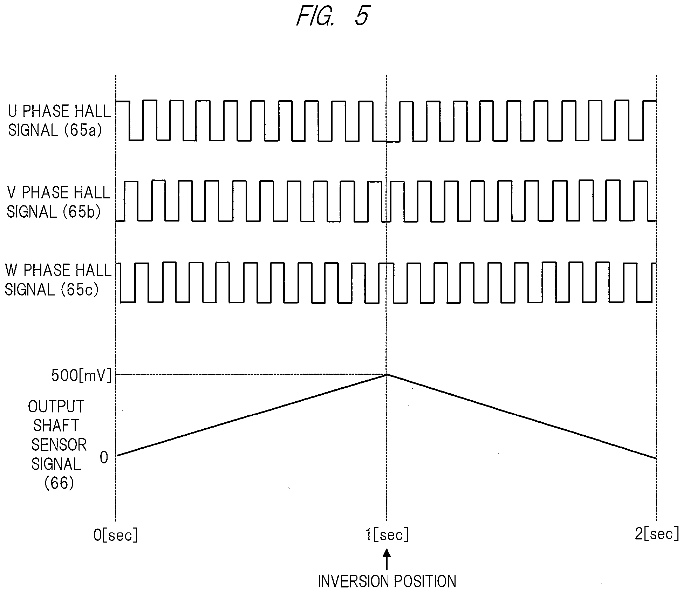

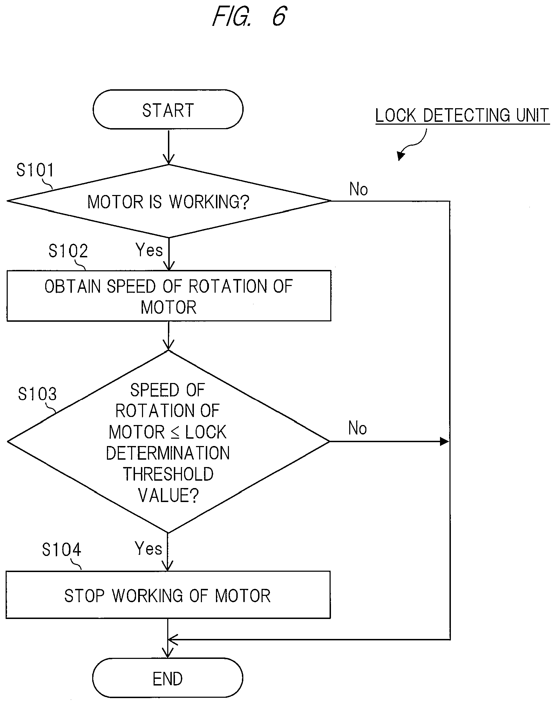

FIG. 4 is a block diagram showing a configuration example of the control board shown in FIG. 2 and FIG. 3. FIG. 5 is a timing chart showing one example of the Hall signals from the rotating shaft sensors and the sensor signal from the output shaft sensor in FIG. 3. FIG. 6 is a flowchart showing an example of an operation of the lock detecting unit shown in FIG. 4.

In FIG. 4, a control unit 71, a PWM signal generating unit 72, a three-phase inverter circuit 73 are mounted on the control board 60 in addition to the rotating shaft sensor 65 and the output shaft sensor 66 described above. Each of the control unit 71 and the PWM signal generating unit 72 is configured by program processing by means of a microcomputer including a CPU, a RAM, a ROM and the like, for example. However, of course, dedicated hardware may be provided in place of the program processing. Alternatively, dedicated hardware may be in charge of part of the program processing.

Although illustration thereof is omitted, the three-phase inverter circuit 73 includes high-side switch elements of three phases (a U phase, a V phase, and a W phase), each of which is constituted by a FET or the like, low-side switch elements of the three phases, each of which is constituted by a FET or the like, and a driver circuit configured to control switching of the six switch elements, for example. The high-side switch elements of the three phases are respectively connected between a positive electrode of an external power source (for example, a battery power source) and output terminals of the three phases (Vu, Vv, Vw). The low-side switch elements of the three phases are respectively connected between a negative electrode of the external power source and the output terminals of the three phases (Vu, Vv, Vw).

The control unit 71 includes a target rotation speed instructing unit 74, a wiper position detecting unit 75, a rotation speed detecting unit 76, and a wiping sequence control unit 77. The rotation speed detecting unit 76 detects speed of rotation of the motor 20 by counting the Hall signal (for example, a pulse width thereof) of the rotating shaft sensor 65. The rotation speed detecting unit 76 then notifies the PWM signal generating unit 72 and the wiping sequence control unit 77 of the detected speed of rotation. The wiper position detecting unit 75 detects positions of the wipers (for example, the wiper blades 17a, 17b shown in FIG. 1) on the basis of the sensor signal from the output shaft sensor 66.

More specifically, as shown in FIG. 5, the Hall signals whose electrical angles are different from the others by 120° are outputted from the respective rotating shaft sensors 65a, 65b, 65c in accordance with the rotational position of the rotor 33. In a case where the rotor 33 has a six-pole structure, three cycles of the electrical angle of 360° are contained while the rotor 33 is rotated once (that is, during a mechanical angle of 360°). The rotation speed detecting unit 76 can detect the speed of rotation of the motor 20 by counting a pulse width and/or the number of pulses in each of such Hall signals.

On the other hand, the sensor signal indicating the rotational position of the output shaft 52b (eventually, the positions of the wipers) is outputted from the output shaft sensor 66. In the present embodiment, the output shaft 52b is normally rotated for a period of time of 0 sec. to 1 sec. The wiper blades 17a, 17b respectively reach the upper inversion positions when the output shaft 52b is rotated in a normal rotation direction by a predetermined angle (< 360°). On the other hand, the output shaft 52b is reversely rotated for a period of time of 1 sec. to 2 sec. The wiper blades 17a, 17b respectively return to the lower inversion positions when the output shaft 52b is rotated in a reverse rotation direction by a predetermined angle. Namely, each of the wiper blades 17a, 17b reciprocates up and down on the windshield 11 once for 2 seconds.

A resistance value of the output shaft sensor (here, the MR sensor) 66 changes in accordance with the magnitude of a magnetic field, which changes with the rotation of the output shaft magnet 53. Herewith, the output shaft sensor 66 outputs the sensor signal whose voltage changes in a predetermined voltage range (for example, 0 to 500 mV) substantially linearly. Further, the output shaft sensor 66 is installed so as to output the maximum voltage at the time of 1 second that becomes the inversion position of each of the wiper blades 17a, 17b. The wiper position detecting unit 75 can detect the position of each of the wiper blades 17a, 17b on the basis of such a sensor signal. In this regard, depending upon such an operation, each of the Hall signals and the sensor signal becomes bilaterally symmetric by the inversion position (timing of 1 second).

Returning to FIG. 4, the wiping sequence control unit 77 includes a condition setting unit 78, a vehicle speed determining unit 79, and a lock detecting unit 80. The vehicle speed determining unit 79 determines whether v (that is, speed of the vehicle 10) detected by a vehicle speed sensor 68 is higher or lower than a vehicle speed determination threshold value defined in advance. Although details thereof will be described later, the condition setting unit 78 sets various kinds of conditions associated with the wiping-out operation on the basis of a determination result of the vehicle speed determining unit 79. The wiping sequence control unit 77 reflects the various kinds of conditions set by the condition setting unit 78 in response to an operation signal for a wiper switch 67 to control various kinds of wiping-out operations. The wiper switch 67 is provided in the vehicle interior of the vehicle 10, and is operated by the operator.

Here, for example, signals for instructing wiping speed (that is, target speed of rotation of the motor 20) such as a high-speed wiping mode, a low-speed wiping mode, or an intermittent wiping mode are contained in the operation signals for the wiper switch 67 in addition to an on-operation signal that is an instruction to carry out the wiping-out operation with respect to the wiper device 12 and an off-operation signal that is an instruction to stop the wiping-out operation. Further, the wiper switch 67 also has a function as a washer switch. Thus, an on-operation signal and an off-operation signal for the washer switch are also contained in the operation signals for the wiper switch (washer switch) 67.

A window washer fluid injection apparatus (not shown in the drawings) is configured to inject window washer fluid onto the windshield 11 in response to the on-operation signal for the washer switch. In order to wipe the injected window washer fluid, the wiper device 12 carries out wiping-out operation in conjunction with the operation signal for the washer switch. Further, in the vehicle 10 on which a headlight washer is mounted, a headlight washer fluid injection apparatus (not shown in the drawings) injects headlight washer fluid onto a headlight in accordance with the on-operation signal for the washer switch (and an "on" state of the headlight, for example). At this time, the headlight washer fluid may adhere onto the windshield 11. For this reason, in order to wipe the headlight washer fluid, the wiper device 12 may carry out the wiping-out operation in conjunction with the operation signal for the washer switch.

The wiping sequence control unit 77 recognizes each of various kinds of operation signals for the wiper switch 67 like this, and issues an instruction based on the recognized operation signal to the target rotation speed instructing unit 74. Examples of the instruction include an instruction to carry out a wiping-out operation, an instruction to stop the wiping-out operation, an instruction for speed while carrying out the wiping-out operation (that is, an instruction for wiping speed (for example, a wiping mode)), and the like. The target rotation speed instructing unit 74 receives the instruction from the wiping sequence control unit 77 and a detection result of the wiper positions by the wiper position detecting unit 75. The target rotation speed instructing unit 74 instructs the target speed of rotation of the motor 20 based on a speed map defined in advance to the PWM signal generating unit 72, thereby driving the motor 20.

A correspondence relationship between the wiper positions and the target speed of rotation of the motor 20 is defined for every wiping mode in the speed map. More specifically, for example, the content as follows is defined. The content contains that the target speed of rotation is gradually increased from the lower inversion position of each wiper toward a middle part, and the target speed of rotation is gradually decreased toward the upper inversion position of the corresponding wiper after predetermined target speed of rotation is maintained at the middle part. The target speed of rotation relatively becomes higher in the high-speed wiping mode compared with that in the low-speed wiping mode. The target rotation speed instructing unit 74 receives the instruction to carry out the wiping-out operation from the wiping sequence control unit 77, and in turn defines target speed of rotation by using the speed map based on the instruction for speed. The target rotation speed instructing unit 74 then instructs the defined target speed of rotation to the PWM signal generating unit 72 in turn.

As is schematically indicated, in a case where the speed of rotation detected by the rotation speed detecting unit 76 is lower than a lock determination threshold value, the lock detecting unit 80 determines that it is under a lock state and carries out a predetermined protecting operation. The lock state means a state in which the speed of rotation of the motor 20 is very low to such an extent that the motor 20 can be regarded as being not rotated mostly. In this case, a load state of the motor 20 is very high, and there is a fear that large current flows to the stator 32, whereby the motor 20 may be broken. For this reason, the protecting operation is carried out by the lock detecting unit 80.

In detail, as shown in FIG. 6, the lock detecting unit 80 obtains the speed of rotation detected by the rotation speed detecting unit 76 during operation (or working) of the motor 20, and determines whether the speed of rotation is lower than the lock determination threshold value or not (Steps S101 to S103). Then, in a case where it is determined that the obtained speed of rotation is lower than the lock determination threshold value, the lock detecting unit 80 determines that it is under the lock state, and stop the operation (or working) of the motor 20 (Step S104).

When the operation of the motor 20 is to be stopped, the wiping sequence control unit 77 issues an emergency shutdown instruction to the target rotation speed instructing unit 74, for example. In response to this instruction, the target rotation speed instructing unit 74 sets the target speed of rotation to zero. Alternatively, the wiping sequence control unit 77 may issue, to the PWM signal generating unit 72, an instruction so as to forcibly stop generation of a PWM signal. In this regard, in a case where it is determined at Step S101 that the motor 20 is not operating, or in a case where it is determined at Step S103 that the speed of rotation of the motor 20 is higher than the lock determination threshold value, the lock detecting unit 80 carries out nothing particularly. Further, the speed of rotation obtained at Step S102 may be detected by pulse interpolation or speed prediction, for example, even though an edge of each of the Hall signals is not necessarily received (that is, even though it is in a situation that the motor 20 is not rotated at all).

Returning to FIG. 4, the PWM signal generating unit 72 includes a PI control unit 81. The PI control unit 81 receives, as an input, an error between the speed of rotation detected by the rotation speed detecting unit 76 and the target speed of rotation from the target rotation speed instructing unit 74 to carry out PI control (proportional integral control). Herewith, the PI control unit 81 controls a duty ratio of the PWM signal so that the error is caused to approach zero. At this time, the wiping sequence control unit 77 determines a duty ratio upper limit. The PI control unit 81 controls the duty ratio in a range lower than the duty ratio upper limit. For example, in a case where the PI control unit 81 obtains a higher duty ratio than the duty ratio upper limit by means of the PI control, the PI control unit 81 does not set an actual duty ratio of the PWM signal to the obtained duty ratio, but sets the actual duty ratio to the duty ratio upper limit.

Further, the PWM signal generating unit 72 determines energization timing of the three phases (including the U phase, the V phase, and the W phase) on the basis of the Hall signals from the rotating shaft sensor 65 (the Hall ICs 65a to 65c). The PWM signal generating unit 72 generates PWM signals of the three phases so as to reflect the duty ratio obtained from the PI control unit 81 thereto, and outputs the PWM signals of the three phases to the three-phase inverter circuit 73 on the basis of the energization timing of the three phases. Each of the switch elements of the three phases in the three-phase inverter circuit 73 receives the PWM signals of the three phases to carry out a switching operation. Here, the duty ratio indicates a ratio of a period of time for "on" of the corresponding switch element in a PWM cycle. When the duty ratio is increased, the period of time for "on" is extended.

In this regard, in FIG. 3 and FIG. 4, the brushless motor provided with the sensor for determining the energization timings on the basis of the Hall signals is used as the motor 20. However, a sensorless brushless motor that determines energization timing by detecting induced voltage may be used. Moreover, the motor 20 is not limited to the brushless motor, and a motor with brush may be used.

### «Schematic Operation of Wiping Sequence Control Unit»

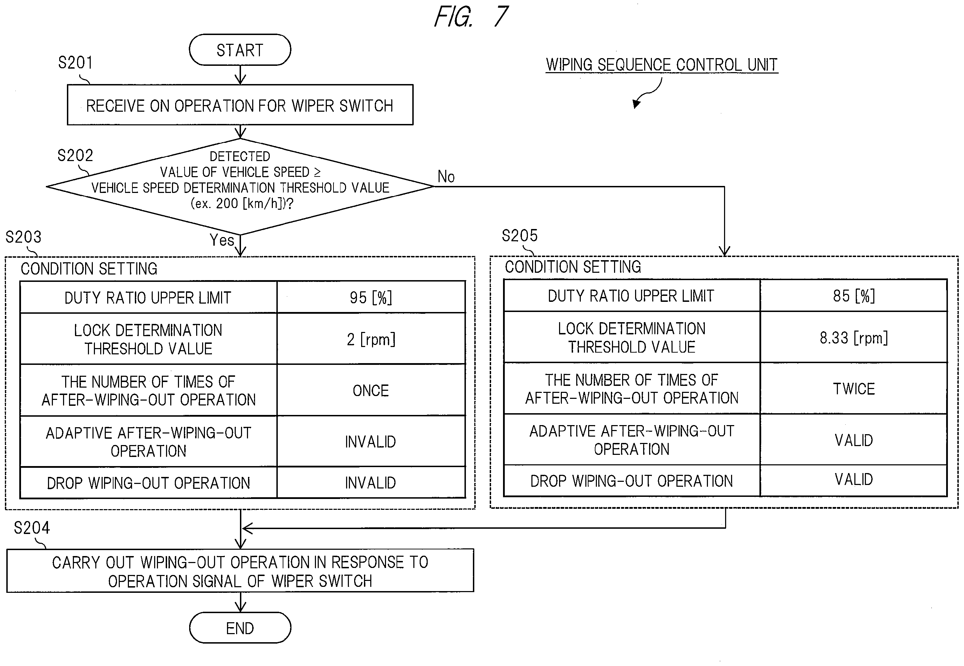

FIG. 7 is a flowchart showing an example of a schematic operation of the wiping sequence control unit shown in FIG. 4. In FIG. 7, the wiping sequence control unit 77 first receives an on-operation signal for the wiper switch 67 (Step S201). Subsequently, the wiping sequence control unit 77 uses the vehicle speed determining unit 79 to determine whether vehicle speed detected by the vehicle speed sensor 68 is higher than a vehicle speed determination threshold value defined in advance or not (Step S202). The vehicle speed determination threshold value is 200 [km/h] or the like, for example.

In a case where it is determined at Step S202 that the vehicle speed is higher than the vehicle speed determination threshold value (that is, in a second case), the wiping sequence control unit 77 sets various kinds of conditions associated with a wiping-out operation by using the condition setting unit 78 (Step S203) . More specifically, the condition setting unit 78 respectively sets a duty ratio upper limit and a lock determination threshold value to 95% (hereinafter, referred to as a "second upper limit") and 2 [rpm] (hereinafter, referred to as a "second determination threshold value"), for example. Moreover, the condition setting unit 78 sets the number of times of the after-wiping-out operation to once (that is, a second number of times in the present embodiment), for example, and sets both an adaptive after-wiping-out operation and a drop wiping-out operation to invalid (that is, the number of times of each of the wiping-out operations is set to zero) . In this regard, the wiper reciprocates up and down once by one wiping-out operation.

On the other hand, in a case where it is determined at Step S202 that the vehicle speed is lower than the vehicle speed determination threshold value (that is, in a first case), the wiping sequence control unit 77 uses the condition setting unit 78 to set various kinds of conditions any or some of which is/are different from that or those at Step S203 (Step S205). More specifically, the condition setting unit 78 respectively sets the duty ratio upper limit and the lock determination threshold value to 85% (hereinafter, referred to as a "first upper limit") and 8.33 [rpm] (hereinafter, referred to as a "first determination threshold value"), for example. Moreover, the condition setting unit 78 sets the number of times of the after-wiping-out operation to twice (that is, a first number of times in the present embodiment), for example. Herewith, the condition setting unit 78 sets both the adaptive after-wiping-out operation and the drop wiping-out operation to effective (that is, sets the number of times of each of the wiping-out operations to the predetermined number of times). The wiping sequence control unit 77 then reflects various kinds of conditions defined in this manner, and carries out the wiping-out operation in response to an operation signal of the wiper switch 67 via the target rotation speed instructing unit 74 and the like (Step S204).

With respect to the duty ratio upper limit described at Steps S203 and S205, by making the duty ratio upper limit higher at the time of high-speed traveling (in the present embodiment, when the vehicle speed is over 200 [km/h]) than that at the time of the low-speed traveling (that is, in the present embodiment, by changing the duty ratio upper limit from 85% to 95%), it is possible to increase torque of the motor 20. As a result, it is possible to ensure the torque of the motor 20 that does not yield to wind pressure even at the time of the high-speed traveling. This makes it possible to realize a normal wiping-out operation.

At the time of the low-speed traveling (in the present embodiment, when the vehicle speed is less than 200 [km/h] (including a situation that the vehicle 10 stops)), a situation that the motor 20 is hardly rotated due to a snowdrift, freeze of the windshield 11, or the like, for example. In this case, one phase (that is, one coil) of the stator 32 is continuously driven by the PWM cycle that is set to the duty ratio of the duty ratio upper limit (that is, the maximum driving current). In a case where the duty ratio upper limit becomes too high under such a situation, larger driving current is allowed to flow into one coil for a longer period of time, whereby there is a fear to make damage or breakage of the motor 20. Thus, in order to suppress the maximum value of the driving current at the time of the low-speed traveling, the duty ratio upper limit is set to a lower value. On the other hand, a situation such as a snowdrift does not occur at the time of the high-speed traveling, whereby a situation that larger driving current flows into one coil for a long period of time hardly occurs . For this reason, even though the duty ratio upper limit is set to a higher value than that at the time of the low-speed traveling, no problem occurs particularly.

With respect to the lock determination threshold value described at Steps S203 and S205, by making the lock determination threshold value lower at the time of the high-speed traveling (in the present embodiment, by changing the lock determination threshold value from 8.33 [rpm] to 2 [rpm]) than that at the low-speed traveling, a situation that the lock detecting unit 80 determines that it is under a lock state hardly occurs. As a result, a situation that the lock state is detected at the time of the high-speed traveling and the motor 20 thus stops in the middle of the wiping-out operation hardly occurs. Therefore, it becomes possible to realize the normal wiping-out operation.

A lock detecting function is a function to prevent large driving current from continuously flowing on the time axis of a motor rotation cycle that is longer than the PWM cycle. At the time of the low-speed traveling, as well as the case of the duty ratio upper limit, a situation may occur that the motor 20 is not rotated mostly and large driving current flows into one coil for a long period of time, for example. Thus, in order to detect such a situation earlier, it is desirable that the lock determination threshold value is set to a higher value to an extent. On the other hand, at the time of the high-speed traveling, a situation that the motor 20 is not rotated mostly is not usually supposed, and no problem occurs particularly even when the lock determination threshold value is set to a lower value to an extent. However, in a case where the situation that the motor 20 is not rotated mostly occurs due to any cause, it is necessary to detect such a situation. For this reason, the lock determination threshold value is set to 2 [rpm] herein. 2 [rpm] is the lower limit speed that can be detected by the rotation speed detecting unit 76, for example. When the speed of rotation of the motor 20 becomes one that cannot be detected by the rotation speed detecting unit 76, the lock detecting unit 80 determines that it is under the lock state.

With respect to the after-wiping-out operation described at Steps S203 and S205, by making the number of times of the after-wiping-out operation smaller at the time of the high-speed traveling (in the present embodiment, by changing the number of times of the after-wiping-out operation from twice to once) than that at the time of the low-speed traveling, the after-wiping-out operation can be carried out normally and efficiently. The after-wiping-out operation is a wiping-out operation for the window washer fluid on the windshield (window surface) 11 after the window washer fluid is injected onto the windshield 11. (A) in a case where a period of time to assert the on-operation signal for the washer switch reaches a fixed period of time, or (B) in a case where the washer switch is switched from the on-operation signal to the off-operation signal, for example, the wiping-out operation by the wiper device 12 is carried out in the vehicle 10. The wiping-out operation for the latter (B) corresponds to the after-wiping-out operation.

As described above, a load on the motor 20 increases due to the wind pressure at the time of high-speed traveling. Further, the windshield 11 becomes a drier state as the number of times of the after-wiping-out operation increases. For this reason, the load on the motor 20 increases further. Thus, by setting the number of times of the after-wiping-out operation to once at the time of the high-speed traveling, the after-wiping-out operation can be carried out in a state that the load on the motor 20 is small (that is, a state that the windshield 11 is wet). At this time, the window washer fluid can be wiped by using the wind pressure unlike that at the time of the low-speed traveling. For this reason, even though the number of times of the after-wiping-out operation is set to once, no problem occurs particularly.

With respect to the adaptive after-wiping-out operation and the drop wiping-out operation described at Steps S203 and S205, by setting the number of times of both the adaptive after-wiping-out operation and the drop wiping-out operation to zero at the time of the high-speed traveling, it is possible to improve efficiency thereof. The adaptive after-wiping-out operation is a wiping-out operation for the headlight washer fluid on the windshield 11 after the headlight washer fluid is injected onto the headlight. For example, in a case where the washer switch is turned "on" in a state that the headlight is turned "on", the headlight washer fluid is injected together with the window washer fluid. Then, when the washer switch is turned "off", part of the headlight washer fluid may be attached onto the windshield 11 depending upon a relationship of a distance between each of injection ports and the windshield 11 after adhesion of the window washer fluid onto the windshield 11 is stopped. The adaptive after-wiping-out operation is a wiping-out operation that is further carried out after the after-wiping-out operation in order to wipe the part of the headlight washer fluid.

Further, the drop wiping-out operation is a wiping-out operation for washer fluid (window washer fluid or headlight washer fluid) that remains on the windshield 11 after a predetermined period of time elapses since the after-wiping-out operation is terminated or the after-wiping-out operation and the adaptive after-wiping-out operation are terminated. Namely, after the after-wiping-out operation and the like are terminated, the washer fluid that remains at the top of the windshield 11 may fall down on the windshield 11 after a predetermined period of time elapses (for example, after a few seconds). The drop wiping-out operation is an operation to wipe this washer fluid. Such washer fluid that is subject for the adaptive after-wiping-out operation and/or the drop wiping-out operation is usually minute. In this case, it is thought that the washer fluid can be wiped out sufficiently by using the wind pressure at the time of the high-speed traveling. Thus, even though the number of times of each of both the after-wiping-out operation and the adaptive after-wiping-out operation is set to zero, no problem occurs particularly. In other words, it becomes possible to carry out the wiping-out operation practically without driving the motor 20 in a high load state (that is, when there is wind pressure and the windshield 11 is in a dry state) deliberately.

As described above, by changing the various kinds of conditions associated with the wiping-out operation in accordance with the vehicle speed, it becomes possible to realize a small wiper device capable of addressing the vehicle speed in a wide range. Namely, it is possible to address vehicle speed of over 200 [km/h] by using a motor with low to medium output on the premise of vehicle speed of less than 200 [km/h] without using a motor with high output on the premise of vehicle speed of over 200 [km/h], for example. As a result, it is possible to make the wiper device smaller, and reduce cost of the wiper device. In this regard, two kinds of conditions are set by using one kind of vehicle speed determination threshold value herein. However, it is possible to set three or more kinds of conditions by using two or more kinds of vehicle speed determination threshold values in some cases.

### «Detailed Operation of Wiping Sequence Control Unit»

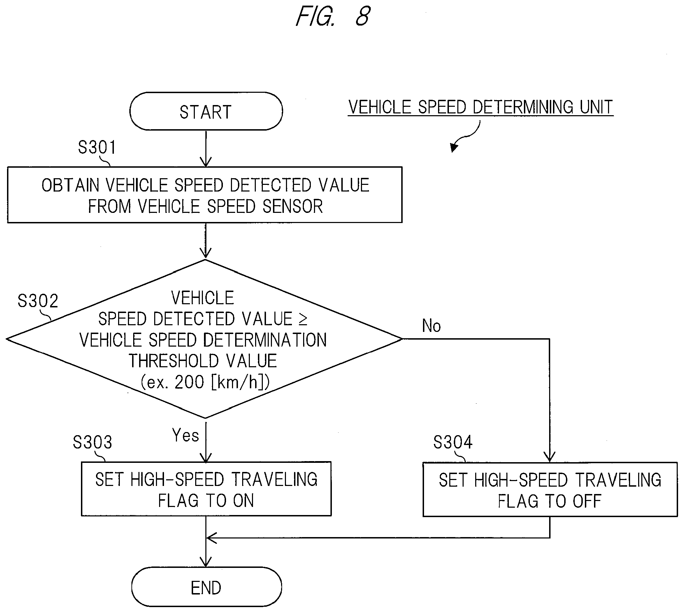

FIG. 8 is a flowchart showing an example of an operation of the vehicle speed determining unit shown in FIG. 4. The vehicle speed determining unit 79 obtains a detected value of vehicle speed (hereinafter, referred to as a "vehicle speed detected value") from the vehicle speed sensor 68 (Step S301), and determines whether the vehicle speed detected value is higher than a vehicle speed determination threshold value defined in advance (for example, 200 [km/h]) or not (Step S302). In a case where it is determined that the vehicle speed detected value is higher than the vehicle speed determination threshold value, the vehicle speed determining unit 79 sets a high-speed traveling flag to "on" (Step S303). On the other hand, in a case where it is determined that the vehicle speed detected value is lower than the vehicle speed determination threshold value, the vehicle speed determining unit 79 sets the high-speed traveling flag to "off" (Step S304).

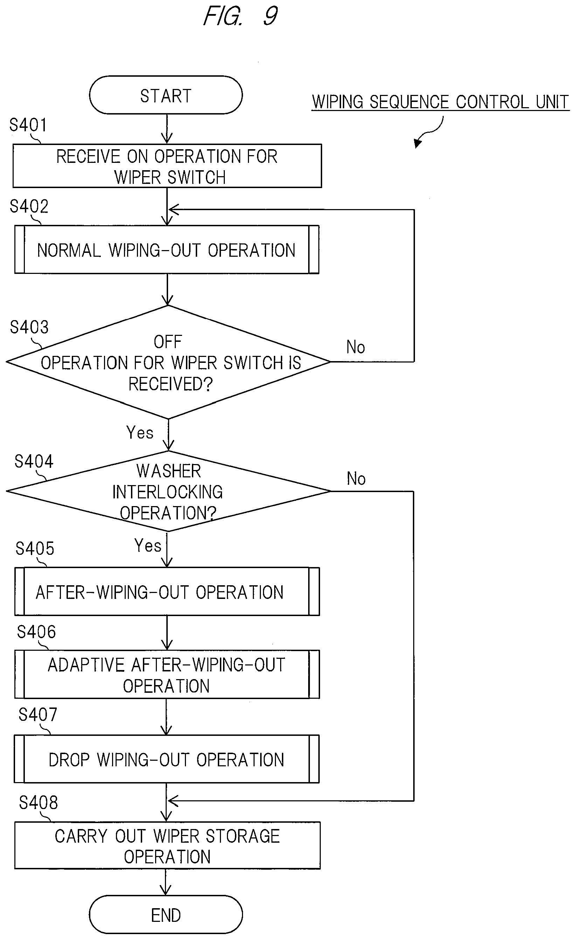

FIG. 9 is a flowchart showing an example of an operation of the wiping sequence control unit shown in FIG. 4. The wiping sequence control unit 77 receives an on-operation signal for the wiper switch 67 (Step S401), and carries out a normal wiping-out operation until an off-operation signal for the wiper switch 67 is received (Steps S402 and S403). When the off-operation signal for the wiper switch 67 is received, the wiping sequence control unit 77 determines whether there is a washer interlocking operation or not (that is, whether the wiper switch 67 is operated as the washer switch or not) (Step S404).

In a case where there is no washer interlocking operation, the wiping sequence control unit 77 carries out a wiper storage operation to respectively return the wiper blades 17a, 17b to the storage positions (Step S408) . Namely, the wiping sequence control unit 77 instructs that effect to the target rotation speed instructing unit 74. On the other hand, in a case where it is determined that there is the washer interlocking operation, the wiping sequence control unit 77 in turn carries out the after-wiping-out operation (Step S405), the adaptive after-wiping-out operation (Step S406), the drop wiping-out operation (Step S407), and the wiper storage operation (Step S408) .

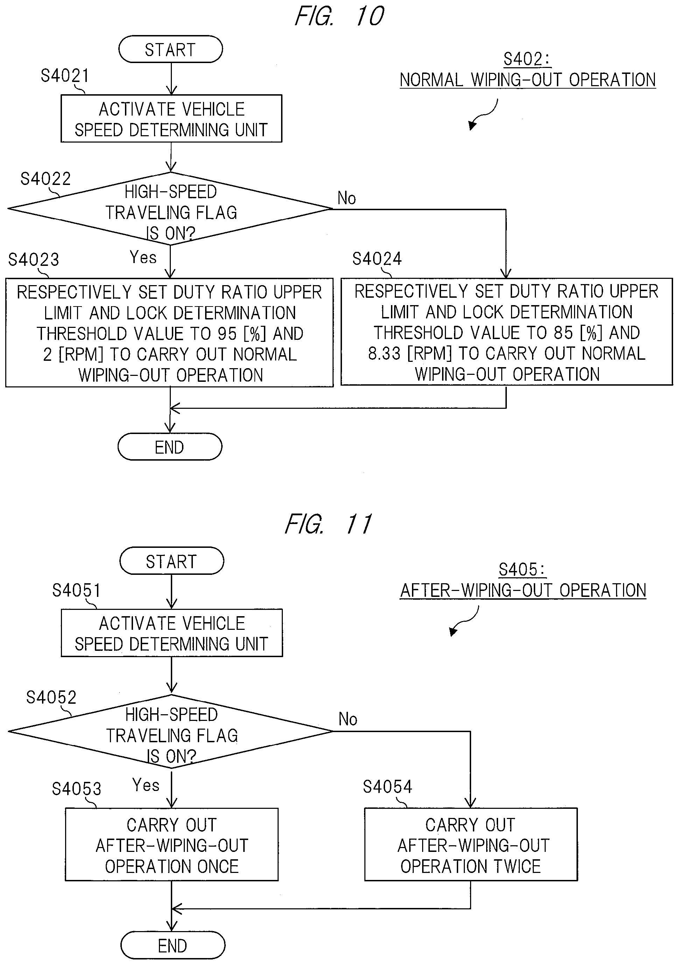

FIG. 10 is a flowchart showing one example of processing content of the normal wiping-out operation (Step S402) in FIG. 9. The wiping sequence control unit 77 activates the vehicle speed determining unit 79 (Step S4021), and determines whether the high-speed traveling flag is set to "on" or not (Step S4022). In a case where it is determined that the high-speed traveling flag is set to "on", the wiping sequence control unit 77 (more specifically, the condition setting unit 78) sets the duty ratio upper limit of 95% (that is, the second upper limit) to the PWM signal generating unit 72, and sets the lock determination threshold value of 2 [rpm] (that is, the second determination threshold value) to the lock detecting unit 80 (Step S4023) . Then, the wiping sequence control unit 77 issues an instruction to carry out the wiping-out operation to the target rotation speed instructing unit 74, whereby the normal wiping-out operation is carried out (Step S4023).

On the other hand, in a case where it is determined at Step S4022 that the high-speed traveling flag is set to "off", the wiping sequence control unit 77 (more specifically, the condition setting unit 78) sets the duty ratio upper limit of 85% (that is, the first upper limit) to the PWM signal generating unit 72, and sets the lock determination threshold value of 8.33 [rpm] (that is, the first determination threshold value) to the lock detecting unit 80 (Step S4024). Then, the wiping sequence control unit 77 issues an instruction to carry out the wiping-out operation to the target rotation speed instructing unit 74, whereby the normal wiping-out operation is carried out (Step S4024) . As shown in FIG. 9, a flow shown in FIG. 10 is carried out repeatedly. This makes it possible to reflect the vehicle speed in real time to carry out the normal wiping-out operation.

FIG. 11 is a flowchart showing one example of processing content of the after-wiping-out operation (Step S405) in FIG. 9. The wiping sequence control unit 77 activates the vehicle speed determining unit 79 (Step S4051), and determines whether the high-speed traveling flag is set to "on" or not (Step S4052). In a case where it is determined that the high-speed traveling flag is set to "on", the wiping sequence control unit 77 (more specifically, the condition setting unit 78) sets the number of times of the after-wiping-out operation to once (Step S4053). Then, the wiping sequence control unit 77 issues an instruction to carry out he wiping-out operation once to the target rotation speed instructing unit 74, whereby the after-wiping-out operation is carried out (Step S4053).

On the other hand, in a case where it is determined at Step S4052 that the high-speed traveling flag is set to "off", the wiping sequence control unit 77 (more specifically, the condition setting unit 78) sets the number of times of the after-wiping-out operation to twice (Step S4054). Then, the wiping sequence control unit 77 issues an instruction to carry out the wiping-out operation twice to the target rotation speed instructing unit 74, whereby the after-wiping-out operation is carried out (Step S4054). As shown in FIG. 9, a flow shown in FIG. 11 including determination of the vehicle speed (Steps S4051 and S4052) is carried out after the off-operation signal for the wiper switch (washer switch) 67 is received (after Step S403). This makes it possible to reflect the vehicle speed in real time to determine the number of times of the after-wiping-out operation.

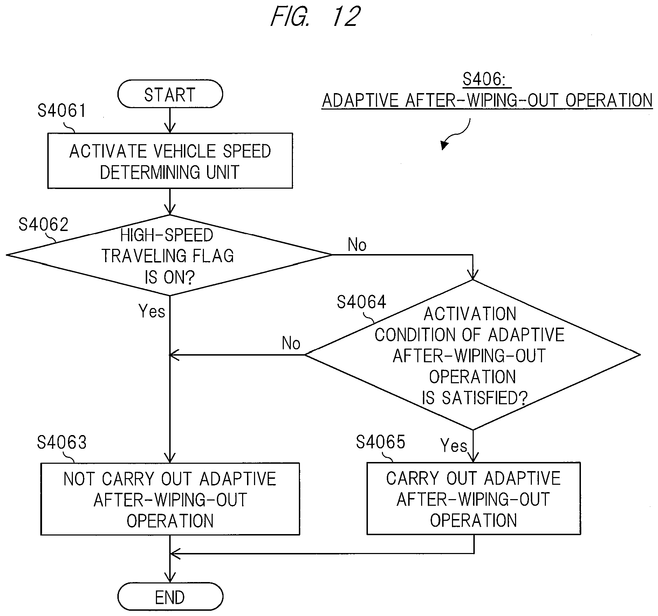

FIG. 12 is a flowchart showing one example of processing content of the adaptive after-wiping-out operation (Step S406) in FIG. 9. The wiping sequence control unit 77 activates the vehicle speed determining unit 79 (Step S4061), and determines whether the high-speed traveling flag is set to "on" or not (Step S4062). In a case where it is determined that the high-speed traveling flag is set to "on", the wiping sequence control unit 77 (more specifically, the condition setting unit 78) sets the number of times of the adaptive after-wiping-out operation to zero, whereby the adaptive after-wiping-out operation is not carried out (Step S4063) .

On the other hand, in a case where it is determined at Step S4062 that the high-speed traveling flag is set to "off", the wiping sequence control unit 77 determines whether an activation condition of the adaptive after-wiping-out operation is satisfied or not (Step S4064). Namely, the adaptive after-wiping-out operation is an optional function suitable for a vehicle on which a headlight washer is mounted. Thus, the activation condition is satisfied in a case where the vehicle is a vehicle for which it is defined in advance to carry out the adaptive after-wiping-out operation. In a case where it is determined that the activation condition is satisfied, the wiping sequence control unit 77 issues an instruction to carry out the wiping-out operation to the target rotation speed instructing unit 74, whereby the adaptive after-wiping-out operation is carried out by the predetermined number of times (for example, once) (Step S4065). On the other hand, in a case where it is determined that the activation condition is not satisfied, the wiping sequence control unit 77 causes the adaptive after-wiping-out operation not to be carried out (Step S4063) . As well as the case of the after-wiping-out operation, it is also possible to reflect the vehicle speed in real time in the adaptive after-wiping-out operation to determine whether the adaptive after-wiping-out operation is to be carried out or not.

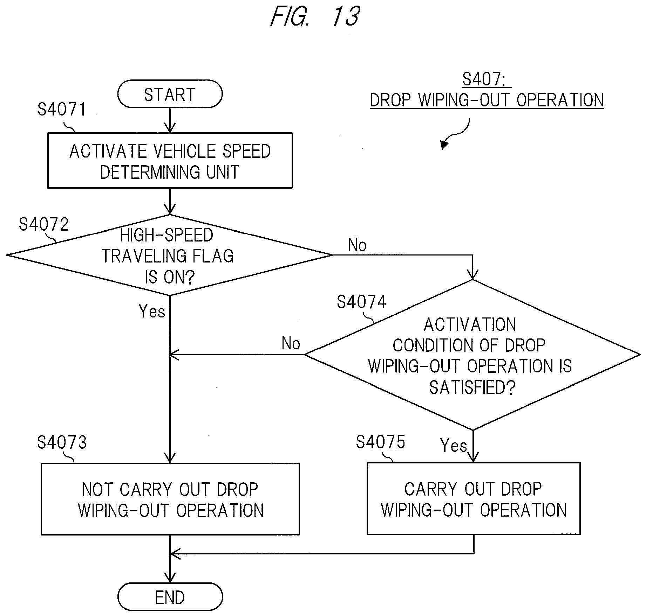

FIG. 13 is a flowchart showing one example of processing content of the drop wiping-out operation (Step S407) in FIG. 9. the wiping sequence control unit 77 activates the vehicle speed determining unit 79 (Step S4071), and determines whether the high-speed traveling flag is set to "on" or not (Step S4072). In a case where it is determined that the high-speed traveling flag is set to "on", the wiping sequence control unit 77 (more specifically, the condition setting unit 78) sets the number of times of the drop wiping-out operation to zero, whereby the drop wiping-out operation is not carried out (Step S4073).

On the other hand, in a case where it is determined at Step S4072 that the high-speed traveling flag is set to "off", the wiping sequence control unit 77 determines whether an activation condition of the drop wiping-out operation is satisfied or not (Step S4074) . Namely, the drop wiping-out operation is usually an optional function for a vehicle. For this reason, in a case where the vehicle is a vehicle or which it is defined in advance to carry out the drop wiping-out operation, the activation condition is satisfied. In a case where the activation condition is satisfied, the wiping sequence control unit 77 issues an instruction to carry out the wiping-out operation to the target rotation speed instructing unit 74, whereby the drop wiping-out operation is carried out by the predetermined number of times (for example, once) (Step S4075) . On the other hand, in a case where it is determined that the activation condition is not satisfied, the wiping sequence control unit 77 causes the drop wiping-out operation not to be carried out (Step S4073) . As well as the case of the after-wiping-out operation, it is also possible to reflect the vehicle speed in real time in the drop wiping-out operation to determine whether the drop wiping-out operation is to be carried out or not.

As described above, by using the processes shown in FIG. 8 to FIG. 13, it is possible to reflect the vehicle speed in real time to appropriately determine various kinds of conditions associated with the wiping-out operation. As a result, it is possible to shorten a period of time when the wiper is driven under an inadequate condition. In this regard, in the examples shown in FIG. 9 to FIG. 13, the duty ratio upper limit and the lock determination threshold value, which are determined at Step S402, are taken over at the time of each of the wiping-out operations of Steps S405 to S407 in FIG. 9. However, the duty ratio upper limit and the lock determination threshold value may also be changed on the basis of the vehicle speed in each of the wiping-out operations of Steps S405 to S407.

The present invention is not limited to each of the embodiments described above. It goes without saying that the present invention may be modified into various forms of applications without departing from the substance of the invention. For example, the case where the motor 20 is used as a driving source of the wiper device 12 whose wiping-out pattern is a tandem type has been described in the embodiment described above. However, the present invention is not limited to this, and the motor 20 can also be used as a driving source of a wiper device with other wiping-out patterns such as an opposite wiping-out type.

Further, the case where the motor 20 is applied to the wiper device 12 provided at a front side of the vehicle 10 has been described in each of the embodiments described above. However, the present invention is not limited to this configuration. The present invention can also be applied to a wiper device provided at a rear side of the vehicle 10, a wiper device provided in a railroad vehicle, a wiper device provided in an airplane, or the like.

Otherwise, quality of material, a shape, a dimension, the number, an installation location, and the like of each of the components of the wiper device according to each of the embodiments described above are arbitrary so long as each of them can achieve the present invention. Further, they are not limited to those in each of the embodiments described above.

## Claims

1. A wiper device (12) mounted on a vehicle (10), the wiper device (12) configured to control a duty ratio in accordance with target speed of rotation to cause a wiper member (15a, 15b) to carry out a wiping-out operation on a window surface (11) by using a motor (20), the target speed of rotation being instructed by an operation for a wiper switch (67), the wiper device (12) comprising:
a rotation speed detecting unit (76) configured to detect speed of rotation of the motor (20);
a PWM signal generating unit (72) configured to control the duty ratio in a range lower than a duty ratio upper limit, and to generate a PWM signal to which the duty ratio is reflected;
a lock detecting unit (80) configured to carry out a predetermined protecting operation in a case where the speed of rotation detected by the rotation speed detecting unit (76) is lower than a lock determination threshold value; and
a condition setting unit (78) configured to respectively set the duty ratio upper limit and the lock determination threshold value to a first upper limit and a first determination threshold value in a first case in which vehicle speed of the vehicle (10) is lower than a vehicle speed determination threshold value defined in advance, the condition setting unit (78) being configured to respectively set the duty ratio upper limit and the lock determination threshold value to a second upper limit higher than the first upper limit and a second determination threshold value lower than the first determination threshold value in a second case in which the vehicle speed is higher than the vehicle speed determination threshold value,
**characterised in that** the predetermined protecting operation carried out by the lock detecting unit (80) is an operation in which working of the motor (20) is stopped, and **in that** the condition setting unit (78) is configured to set a number of times of an after-wiping-out operation to a first number of times in the first case, the after-wiping-out operation being a wiping-out operation for window washer fluid on the window surface after the window washer fluid is injected onto the window surface, and
the condition setting unit (78) is configured to set the number of times of the after-wiping-out operation to a second number of times in the second case, the second number of times being smaller than the first number of times.

2. The wiper device (12) according to claim 1,
wherein the condition setting unit (78) is configured to set a number of times of an adaptive after-wiping-out operation to a predetermined number of times in the first case, the adaptive after-wiping-out operation being a wiping-out operation for headlight washer fluid on the window surface after the headlight washer fluid is injected onto a headlight, and
wherein the condition setting unit (78) is configured to set the number of times of the adaptive after-wiping-out operation to zero in the second case.

3. The wiper device (12) according to claim 1,
wherein the condition setting unit (78) is configured to set a number of times of a drop wiping-out operation to a predetermined number of times in the first case, the drop wiping-out operation being a wiping-out operation for the window washer fluid that remains on the window surface after a predetermined period of time elapses since the after-wiping-out operation is terminated, and
wherein the condition setting unit (78) is configured to set the number of times of the drop wiping-out operation to zero in the second case.

4. The wiper device (12) according to claim 1,
wherein the condition setting unit (78) is configured to determine whether the vehicle (10) is in the first case or the second case after an off-operation signal for the wiper switch (67) is received, and to set the number of times of the after-wiping-out operation in accordance with a determination result.

## Patentansprüche

1. Wischervorrichtung (12), die an einem Fahrzeug (10) angebracht ist, wobei die Wischervorrichtung (12) so konfiguriert ist, dass sie eine relative Einschaltdauer in Übereinstimmung mit einer Soll-Drehgeschwindigkeit steuert, um zu bewirken, dass ein Wischerelement (15a, 15b) einen Wischvorgang auf einer Fensterfläche (11) unter Verwendung eines Motors (20) ausführt, wobei die Soll-Drehgeschwindigkeit durch eine Betätigung für einen Wischerschalter (67) angewiesen wird, wobei die Wischervorrichtung (12) umfasst:
eine Drehgeschwindigkeitserfassungseinheit (76), die so konfiguriert ist, dass sie die Drehgeschwindigkeit des Motors (20) erfasst;
eine PWM-Signalerzeugungseinheit (72), die so konfiguriert ist, dass sie die relative Einschaltdauer in einem Bereich unterhalb einer oberen Grenze der relativen Einschaltdauer steuert und ein PWM-Signal erzeugt, auf das die relative Einschaltdauer reflektiert wird;
eine Verriegelungserfassungseinheit (80), die so konfiguriert ist, dass sie einen vorbestimmten Schutzbetrieb in einem Fall ausführt, in dem die von der Drehgeschwindigkeitserfassungseinheit (76) erfasste Drehgeschwindigkeit niedriger als ein Verriegelungsbestimmungsschwellenwert ist; und
eine Bedingungseinstelleinheit (78), die so konfiguriert ist, dass sie jeweils in einem ersten Fall, in dem die Fahrzeuggeschwindigkeit des Fahrzeugs (10) niedriger als ein im Voraus definierter Fahrzeuggeschwindigkeitsbestimmungsschwellenwert ist, die obere Grenze der relativen Einschaltdauer und den Verriegelungsbestimmungsschwellenwert auf eine erste obere Grenze und einen ersten Bestimmungsschwellenwert einstellt, wobei die Bedingungseinstelleinheit (78) so konfiguriert ist, dass sie jeweils in einem zweiten Fall, in dem die Fahrzeuggeschwindigkeit höher als der Fahrzeuggeschwindigkeitsbestimmungsschwellenwert ist, die obere Grenze der relativen Einschaltdauer und den Verriegelungsbestimmungsschwellenwert auf eine zweite obere Grenze, die höher als die erste obere Grenze ist, und einen zweiten Bestimmungsschwellenwert, der niedriger als der erste Bestimmungsschwellenwert ist, einstellt,
**dadurch gekennzeichnet, dass** der vorbestimmte Schutzbetrieb, der von der Verriegelungserfassungseinheit (80) ausgeführt wird, ein Betrieb ist, bei dem der Betrieb des Motors (20) gestoppt wird,
und dass die Bedingungseinstelleinheit (78) so konfiguriert ist, dass sie eine Anzahl von Malen eines Nachauswischbetriebs auf eine erste Anzahl von Malen im ersten Fall einstellt, wobei der Nachauswischbetrieb ein Auswischbetrieb für Scheibenwaschflüssigkeit auf der Fensteroberfläche ist, nachdem die Scheibenwaschflüssigkeit auf die Fensteroberfläche gespritzt wird, und
die Bedingungseinstelleinheit (78) so konfiguriert ist, dass sie die Anzahl der Male des Nachauswischbetriebs auf eine zweite Anzahl von Malen im zweiten Fall einstellt, wobei die zweite Anzahl von Malen kleiner ist als die erste Anzahl von Malen.

2. Wischervorrichtung (12) nach Anspruch 1,
wobei die Bedingungseinstelleinheit (78) so konfiguriert ist, dass sie eine Anzahl von Malen eines adaptiven Nachauswischbetriebs auf eine vorbestimmte Anzahl von Malen im ersten Fall einstellt, wobei der adaptive Nachauswischbetrieb ein Auswischbetrieb für Scheinwerferwaschflüssigkeit auf der Fensteroberfläche ist, nachdem die Scheinwerferwaschflüssigkeit auf einen Scheinwerfer gespritzt wird, und
wobei die Bedingungseinstellungseinheit (78) so konfiguriert ist, dass sie die Anzahl der Male des adaptiven Nachauswischbetriebs im zweiten Fall auf Null setzt.

3. Wischervorrichtung (12) nach Anspruch 1,
wobei die Bedingungseinstelleinheit (78) so konfiguriert ist, dass sie eine Anzahl von Malen eines Tropfenauswischbetriebs auf eine vorbestimmte Anzahl von Malen im ersten Fall einstellt, wobei der Tropfenauswischbetrieb ein Auswischbetrieb für die Scheibenwaschflüssigkeit ist, die auf der Fensteroberfläche verbleibt, nachdem eine vorbestimmte Zeitspanne verstrichen ist, seit der Auswischbetrieb beendet ist, und
wobei die Bedingungseinstellungseinheit (78) so konfiguriert ist, dass sie die Anzahl der Male des Tropfenauswischbetriebs im zweiten Fall auf Null setzt.

4. Wischervorrichtung (12) nach Anspruch 1,
wobei die Bedingungseinstellungseinheit (78) konfiguriert ist, um zu bestimmen, ob sich das Fahrzeug (10) in dem ersten Fall oder dem zweiten Fall befindet, nachdem ein Aus-Betriebssignal für den Wischerschalter (67) empfangen wurde, und um die Anzahl der Male des Auswischbetriebs in Übereinstimmung mit einem Bestimmungsergebnis einzustellen.

## Revendications

1. Dispositif d'essuie-glace (12) monté sur un véhicule (10), le dispositif d'essuie-glace (12) étant configuré pour commander un facteur de marche en fonction d'une vitesse de rotation cible pour amener un élément d'essuie-glace (15a, 15b) à effectuer une opération d'essuyage sur une surface de fenêtre (11) en utilisant un moteur (20), la vitesse de rotation cible étant instruite par une opération pour un commutateur d'essuie-glace (67), le dispositif d'essuie-glace (12) comprenant :
une unité de détection de vitesse de rotation (76) configurée pour détecter la vitesse de rotation de moteur (20) ;
une unité de génération de signal PWM (72) configurée pour commander le facteur de marche dans une plage inférieure à une limite supérieure de facteur de marche, et pour générer un signal PWM auquel le facteur de marche est réfléchi ;
une unité de détection de verrouillage (80) configurée pour effectuer une opération de protection prédéterminée dans un cas où la vitesse de rotation détectée par l'unité de détection de vitesse de rotation (76) est inférieure à une valeur de seuil de détermination de verrouillage ; et
une unité de réglage de condition (78) configurée pour régler respectivement la limite supérieure de facteur de marche et la valeur de seuil de détermination de verrouillage à une première limite supérieure et à une première valeur de seuil de détermination dans un premier cas dans lequel la vitesse de véhicule (10) est inférieure à une valeur de seuil de détermination de la vitesse de véhicule définie à l'avance, l'unité de réglage de condition (78) étant configurée pour régler respectivement la limite supérieure de facteur de marche et la valeur de seuil de détermination de verrouillage à une seconde limite supérieure supérieure à la première limite supérieure et à une seconde valeur de seuil de détermination inférieure à la première valeur de seuil de détermination dans un second cas dans lequel la vitesse de véhicule est supérieure à la valeur de seuil de détermination de la vitesse de véhicule,
**caractérisé en ce que** l'opération de protection prédéterminée exécutée par l'unité de détection de verrouillage (80) est une opération dans laquelle le fonctionnement de moteur (20) est arrêté,
et **en ce que** l'unité de réglage de condition (78) est configurée pour régler un nombre de fois d'une opération d'essuyage ultérieur à un premier nombre de fois dans le premier cas, l'opération d'essuyage ultérieur étant une opération d'essuyage pour le fluide de lave-vitre sur la surface de la fenêtre après que le fluide de lave-vitre est injecté sur la surface de la fenêtre, et
l'unité de réglage de condition (78) est configurée pour régler le nombre de fois de l'opération d'essuyage ultérieur à un second nombre de fois dans le second cas, le second nombre de fois étant inférieur au premier nombre de fois.

2. Dispositif d'essuie-glace (12) selon la revendication 1,
dans lequel l'unité de réglage de condition (78) est configurée pour régler un nombre de fois d'une opération d'essuyage ultérieur adaptative à un nombre de fois prédéterminé dans le premier cas, l'opération d'essuyage ultérieur adaptative étant une opération d'essuyage pour le liquide de lave-phare sur la surface de la fenêtre après que le liquide de lave-phare est injecté sur un phare, et
dans lequel l'unité de réglage de condition (78) est configurée pour régler le nombre de fois de l'opération d'essuyage ultérieur adaptative à zéro dans le second cas.

3. Dispositif d'essuie-glace (12) selon la revendication 1,
dans lequel l'unité de réglage de condition (78) est configurée pour régler un nombre de fois d'une opération d'essuyage de goutte à un nombre de fois prédéterminé dans le premier cas, l'opération d'essuyage de goutte étant une opération d'essuyage pour le liquide de lave-glace qui reste sur la surface de la fenêtre après qu'une période de temps prédéterminée se soit écoulée depuis que l'opération d'essuyage ultérieur est terminée, et
dans lequel l'unité de réglage de condition (78) est configurée pour régler le nombre de fois de l'opération d'essuyage de goutte à zéro dans le second cas.

4. Dispositif d'essuie-glace (12) selon la revendication 1,
dans lequel l'unité de réglage de condition (78) est configurée pour déterminer si le véhicule (10) se trouve dans le premier cas ou le second cas après qu'un signal de mise hors service pour le commutateur d'essuie-glace (67) a été reçu, et pour régler le nombre de fois de l'opération d'essuyage ultérieur en fonction d'un résultat de détermination.
